(19) Europäisches Patentamt / European Patent Office / Office européen des brevets

(11) **EP 2 159 118 A1**

(12) **DEMANDE DE BREVET EUROPEEN**

(43) Date de publication:
**03.03.2010 Bulletin 2010/09**

(51) Int Cl.:
**B60W 10/06** (2006.01)   **B60W 10/02** (2006.01)
**B60W 30/18** (2006.01)

(21) Numéro de dépôt: **09165788.2**

(22) Date de dépôt: **17.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **26.08.2008 FR 0855724**

(71) Demandeur: **PEUGEOT CITROËN AUTOMOBILES SA**
**78140 Vélizy Villacoublay (FR)**

(72) Inventeur: **Rosanne, Hervé**
**92110, Clichy (FR)**

(54) **Procédé et dispositif de contrôle commandé de marche d'un véhicule**

(57) Pour contrôler commander la marche d'un véhicule équipé d'un moteur thermique et d'une pédale d'accélérateur, le procédé comprend :
- une étape (806) de rampage activée lorsqu'une vitesse du véhicule (V) est inférieure à une vitesse de seuil (Vs) et lorsqu'une course de pédale d'accélérateur (CPA) est inférieure à un pourcentage de seuil (x%), dans laquelle le moteur thermique fonctionne à un régime constant de ralenti et dans laquelle une partie du couple du moteur thermique est transmise en fonction de la course de pédale d'accélérateur (CPA);
- une étape (808) d'accélération activée lorsque la vitesse du véhicule (V) est inférieure à la vitesse de seuil (Vs) et lorsque la course de pédale d'accélérateur (CPA) est supérieure au pourcentage de seuil (x%), dans laquelle le couple du moteur thermique est transmis en totalité et dans laquelle le couple du moteur thermique augmente en fonction de la course de pédale d'accélérateur (CPA).

Fig. 2

**Description**

L'invention concerne un procédé et un dispositif de contrôle commande de marche d'un véhicule, notamment d'un véhicule automobile équipé d'une boîte de vitesse robotisée dans le domaine des BVMP/DCT (Boîtes de vitesses manuelles pilotées / Boîtes de vitesses à double embrayage).

Les BVMP/DCT, facilitent la conduite en ce qu'elles permettent de s'affranchir d'une commande manuelle d'embrayage comme le permettent les boîtes automatiques. Elles présentent l'avantage de consommer moins d'énergie que les boîtes de vitesses automatiques et de permettre au conducteur une certaine maîtrise du passage des rapports de boîte.

Une fonction de rampage telle qu'on la rencontre sur les boîtes de vitesses automatiques, est utile car en son absence, le véhicule est difficilement manoeuvrable. Les BVMP/DCT proposant cette fonctionnalité, l'activent habituellement sur condition du relâché du frein. Mais cette méthode n'est pas comprise par un conducteur habitué aux boîtes de vitesses mécaniques (BVM) qui est surpris par l'activation automatique du rampage sur relâché de frein.

Le document WO2006/030145 divulgue ainsi une sélection de rampage en vitesse lorsque le frein est relâché. Cette fonction de rampage, est activée lorsque l'enfoncement de la pédale d'accélérateur est inférieur à un seuil de pédale et la vitesse du véhicule est inférieure à un seuil de vitesse. Cependant, quel que soit le mode de rampage sélectionné, à l'image de celui d'une boîte automatique, il ne laisse aucune maîtrise au conducteur.

Pour remédier aux problèmes de l'état antérieur de la technique, un objet de l'invention est un procédé de contrôle commande de marche d'un véhicule équipé d'un moteur thermique et d'une pédale d'accélérateur, comprenant :

- une étape de rampage activée lorsqu'une vitesse du véhicule est inférieure à une vitesse de seuil et lorsqu'une course de pédale d'accélérateur est inférieure à un pourcentage de seuil, dans laquelle le moteur thermique fonctionne à un régime constant de ralenti et dans laquelle une partie du couple du moteur thermique est transmise en fonction de la course de pédale d'accélérateur;
- une étape d'accélération activée lorsque la vitesse du véhicule est inférieure à la vitesse de seuil et lorsque la course de pédale d'accélérateur est supérieure au pourcentage de seuil, dans laquelle le couple du moteur thermique est transmis en totalité et dans laquelle le régime du moteur thermique augmente en fonction de la course de pédale d'accélérateur.

Particulièrement, le procédé comprend :

- une étape de roulage activé lorsque la vitesse du véhicule est supérieure ou égale à la vitesse de seuil, dans laquelle le régime du moteur thermique augmente en fonction de la course de pédale d'accélérateur et dans laquelle une puissance du moteur thermique est transmise en fonction de la course de pédale d'accélérateur ;
- une étape de manoeuvre activé lorsque la vitesse du véhicule est inférieure à la vitesse de seuil, au cours de laquelle est activée soit l'étape de rampage, soit l'étape d'accélération.

Avantageusement, dans l'étape de rampage, une consigne constante de régime est appliquée au moteur et la course de pédale d'accélérateur commande une fermeture d'embrayage.

Avantageusement encore, dans l'étape d'accélération, une consigne variable de couple moteur est appliquée au moteur en fonction de la course de pédale d'accélérateur en commandant une fermeture totale d'embrayage afin d'assurer le décollage du véhicule.

De préférence, une valeur de consigne est filtrée de façon à atténuer toute variation brusque de consigne.

L'invention a aussi pour objet un dispositif de contrôle commande de marche d'un véhicule équipé d'un moteur thermique et d'une pédale d'accélérateur, comprenant un composant électronique agencé pour recevoir en entrée une vitesse du véhicule et une course de pédale d'accélérateur et agencé pour générer en sortie :

- une consigne de régime constant de ralenti du moteur thermique et une consigne de couple à transmettre en fonction de la course de pédale d'accélérateur lorsque la vitesse du véhicule est inférieure à une vitesse de seuil et lorsque la course de pédale d'accélérateur (CPA) est inférieure à un pourcentage de seuil;
- une consigne de régime croissant du moteur thermique en fonction de la course de pédale d'accélérateur et une consigne de couple en saturation lorsque la vitesse du véhicule est inférieure à une vitesse de seuil et lorsque la course de pédale d'accélérateur est supérieure au pourcentage de seuil.

Particulièrement, le composant électronique est agencé pour générer en sortie la consigne de régime du moteur thermique et la consigne de couple, adaptées à une boîte de vitesses manuelle pilotée en mode roulage lorsque la vitesse du véhicule est supérieure ou égale à la vitesse de seuil, et en mode manoeuvre lorsque la vitesse du véhicule est inférieure à la vitesse de seuil (Vs).

Alternativement, le composant électronique est agencé pour générer en sortie la consigne de régime du moteur thermique et la consigne de couple, adaptées à une boîte de vitesses manuelle à double embrayage en mode roulage lorsque la vitesse du véhicule est supérieure ou égale à la vitesse de seuil, et en mode manoeuvre lorsque la vitesse du véhicule est inférieure à la vitesse de seuil.

De préférence, une valeur de consigne est filtrée de façon à atténuer toute variation brusque de consigne.

L'invention sera mieux comprise à la lecture de la description qui suit et à l'examen des figures qui l'accompagnent. Ces figures ne sont données qu'à titre illustratif et nullement limitatif de l'invention. Elles montrent :

- figure 1 : une représentation schématique des éléments essentiels d'une chaîne de transmission de véhicule pour mettre en oeuvre l'invention ;
- figure 2 : des étapes de procédé conforme à l'invention.

Les éléments identiques conservent la même référence d'une figure à l'autre.

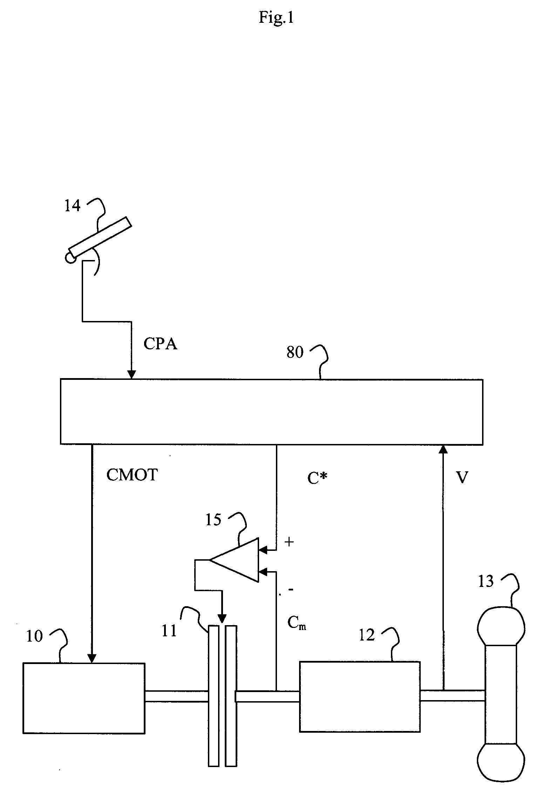

En référence à la figure 1, une chaîne cinématique d'entraînement de véhicule comprend un moteur thermique 10, une boîte de vitesses 12 de type manuel piloté (BVMP) ou à double embrayage (DCT) et un embrayage 11 pour transférer progressivement le couple du moteur 10 sur l'arbre primaire de la boîte de vitesse pendant les phases de synchronisation du moteur sur l'arbre primaire de la boîte de vitesse. L'arbre secondaire de la boîte de vitesse 12 entraîne les roues motrices 13 du véhicule. Le schéma de la figure 1 est purement illustratif, ainsi le différentiel entre la boîte de vitesse et les roues ou les différents accessoires du moteur, ne sont pas représentés. Le régime du moteur thermique 10 est commandé par une pédale d'accélérateur 14. Un capteur de course de la pédale d'accélérateur 14 génère un signal analogique ou numérique en fonction d'un enfoncement de la pédale.

Le dispositif de contrôle commande de marche du véhicule ici représenté, comprend un composant électronique 80 agencé pour recevoir en entrée une valeur V mesurée de vitesse du véhicule et la course de pédale d'accélérateur CPA. La vitesse du véhicule est par exemple estimée à partir de la vitesse de rotation de l'arbre secondaire de la boîte de vitesse, d'un dispositif de contrôle de freinage ABS ou autre, voire d'un système de navigation par satellite (GPS).

Le composant électronique 80 est agencé pour générer en sortie une consigne de couple CMOT de fonctionnement du moteur thermique 10 et une consigne C* de couple à transmettre du moteur vers la boîte de vitesse en jouant sur l'ouverture et la fermeture de l'embrayage 11.

La consigne C* de couple, est appliquée de manière connue en soi, sur une entrée positive d'amplificateur 15, par exemple opérationnel, dont la sortie commande l'ouverture et la fermeture de l'embrayage 11. Un signal normalisé de sortie à zéro de l'amplificateur 15, commande typiquement une ouverture totale de l'embrayage 11. Un signal normalisé de sortie unitaire de l'amplificateur 15, commande typiquement une fermeture totale de l'embrayage 11. L'amplificateur 15 a un gain proportionnel intégral calculé de manière connue en soi, de façon à concilier au mieux dynamique de réponse et erreur nulle en régime établi. On rappelle que l'erreur d'entrée de l'amplificateur résulte de la différence entre la consigne reçue sur l'entrée positive et un retour de mesure reçu sur une entrée négative. Le retour est une valeur de couple mesurée sur l'arbre primaire de la boîte de vitesse 12 si la consigne C* est homogène à un couple. Le retour est une valeur de fermeture mesurée sur l'embrayage 11 si la consigne C* est homogène à une fermeture d'embrayage, connaissant la relation entre couple transmis et fermeture de l'embrayage 11.

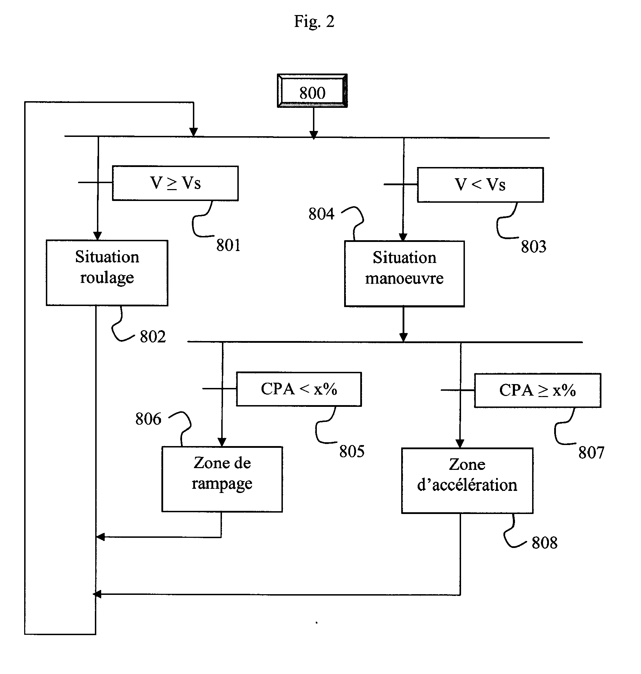

Le composant électronique 80 est agencé, sous forme d'ensemble comprenant un processeur et une mémoire permanente qui héberge un programme exécutable par le processeur ou sous forme de circuit dédié par exemple de type ASIC, pour exécuter le procédé expliqué à présent en référence à la figure 2.

Le procédé de contrôle commande de marche du véhicule, part d'une étape initiale 800 d'échantillonnage de la vitesse V du véhicule.

Une valeur de vitesse V mesurée inférieure à une vitesse de seuil Vs, valide une transition 803 et une valeur de vitesse V mesurée supérieure ou égale à la vitesse de seuil Vs, valide une transition 801. La vitesse de seuil est typiquement de l'ordre de 10 km/h.

Une validation de la transition 803 active une étape 804 de manoeuvre adaptée à une situation de manoeuvre.

A partir de l'étape 804, une course de pédale d'accélérateur CPA ou en d'autres termes, un pourcentage d'enfoncement de la pédale d'accélérateur 14, inférieure à x%, valide une transition 805. Pour donner un ordre de grandeur, on prend par exemple x=5 car 5% d'enfoncement est assez représentatif d'un appui léger sur la pédale d'accélérateur comparable à celui qu'on appliquerait avant de commencer à relâcher la pédale d'embrayage d'un véhicule équipé d'une boîte de vitesse manuelle.

Une validation de la transition 805 active une étape 806 de rampage dans laquelle la valeur de la consigne CMOT est positionnée à une valeur qui fait fonctionner le moteur thermique sur son régime de ralenti. L'idée est de commander le rampage uniquement par le pilotage de l'embrayage sans augmenter le régime moteur, pour faciliter les phases de manoeuvre. Afin que le conducteur puisse obtenir ce rampage spécifique, le composant électronique 80 utilise une course dédiée de la pédale d'accélérateur. Dans cette zone rampage située en début de course pédale accélérateur, typiquement sur une plage de 5%, le moteur reste au ralenti et le composant électronique 80 pilote l'embrayage 11 de façon linéaire, c'est-à-dire que, à 0 % de course pédale, le rampage est désactivé et à la limite de la zone rampage, le rampage est à la valeur cible. Ladite valeur cible correspond à une fermeture d'embrayage qui est celle qu'on avait habituellement au par avant lorsqu'on relâchait le frein, c'est à dire une fermeture d'embrayage qui permet de transmettre un maximum de couple sur l'arbre primaire de la boîte de vitesse sans faire caler le moteur. En positions intermédiaires entre 0% et 5%, le rampage a une cible croissante entre zéro et la valeur cible. En d'autres termes, l'embrayage est fermé progressivement de sorte qu'une partie du couple du moteur thermique est transmise en fonction de la course de pédale d'accélérateur (CPA). Les consignes évoluent par exemple de la façon suivante :

C* (rampage) := g(V,CPA) = • •CPA (avec • = 20 par exemple).

A partir de l'étape 804 en situation de manoeuvre, une course de pédale d'accélérateur CPA ou en d'autres termes, un pourcentage d'enfoncement de la pédale d'accélérateur 14, supérieure ou égal à x%, valide une transition 807. En gardant le même ordre de grandeur de 5% d'enfoncement que précédemment, son franchissement est assez représentatif d'un appui sur la pédale d'accélérateur qui montre une volonté réelle du conducteur de faire avancer son véhicule.

Une validation de la transition 807 active une étape 808 d'accélération dans laquelle le couple du moteur thermique est transmis en totalité et dans laquelle le régime du moteur thermique augmente en fonction de la course de pédale d'accélérateur CPA. La consigne de couple C* normalisée est amenée à l'unité de façon à progressivement fermer totalement l'embrayage. Dans la zone accélération située au-delà de la zone rampage jusqu'à la fin de course pédale, le moteur et la boîte de vitesse manuelle pilotée (BVMP) ou à double embrayage (DCT), assurent un fonctionnement classique. Le moteur applique un couple cible en fonction de la cartographie pédale de sorte que la boîte de vitesse manuelle pilotée (BVMP) ou à double embrayage (DCT), assure la fonction décollage puis le fonctionnement en roulage.

Une validation de la transition 801 active une étape 802 de roulage, adaptée à une situation de roulage, dans laquelle le régime du moteur thermique augmente en fonction de la course de pédale d'accélérateur CPA et dans laquelle une puissance du moteur thermique est transmise en fonction de la course de pédale d'accélérateur CPA. Durant la situation de roulage, la gestion du couple moteur et de l'embrayage, ne varie pas du fonctionnement habituel, en d'autres termes, de ce qui existe actuellement dans les systèmes BVMP ou DCT.

A chaque cycle d'exécution du procédé, la vitesse V du véhicule est échantillonnée à un instant t de sorte que selon l'évolution de la vitesse par rapport à un échantillonnage à l'instant t-1 précédent, on peut aussi bien passer d'une situation de roulage à une situation de manoeuvre que d'une situation de manoeuvre à une situation de roulage ou rester dans la situation précédente. De même, à chaque cycle d'exécution du procédé, la course de pédale d'accélérateur CPA est échantillonnée à un instant t de sorte que selon l'évolution de la course de pédale par rapport à un échantillonnage à l'instant t-1 précédent lorsqu'on est dans une situation de manoeuvre, on peut aussi bien passer d'une zone d'accélération à une zone de rampage que d'une zone de rampage à une zone d'accélération ou rester dans la zone précédente.

De façon à atténuer toute variation brusque de consigne lorsque à un instant t de cycle d'exécution du procédé, on passe dans une étape 802, 806 ou 808 différente de l'étape 802, 806 ou 808 dans laquelle on était à l'instant t-1 précédent, les valeurs de consigne sont filtrées avant d'être appliquées sur le moteur 10 et sur l'embrayage 11 :

$$\mathrm{CMOT(t)} := \frac{\mathrm{f(V(t),CPA(t))} + \lambda\mathrm{CMOT(t-1)}}{1+\lambda} \quad ;$$

$$\mathrm{C^*(t)} := \frac{\mathrm{g(V(t),CPA(t))} + \lambda\mathrm{C^*(t-1)}}{1+\lambda} \quad .$$

La valeur de • est déterminée de manière connue, en fonction de la constante de temps souhaitée.

D'autres conditions que les conditions portant sur la vitesse du véhicule et la course de pédale d'accélérateur, peuvent être utilisées sans sortir du cadre de la présente invention. De telles conditions constituent alors des moyens équivalents à ceux énoncés pour valider les transitions 801, 803, 805 et 807.

On notera que l'invention qui vient d'être décrite, permet une meilleure contrôlabilité du véhicule par le conducteur, lors des phases de manoeuvre du véhicule (en parking par exemple). L'invention permet ainsi d'améliorer la manoeuvrabilité des véhicules équipés de BVMP ou DCT.

**Revendications**

**1.** Procédé de contrôle commande de marche d'un véhicule équipé d'un moteur thermique et d'une pédale d'accélérateur, comprenant :

- une étape (806) de rampage activée lorsqu'une vitesse du véhicule (V) est inférieure à une vitesse de seuil (Vs) et lorsqu'une course de pédale d'accélérateur (CPA) est inférieure à un pourcentage de seuil (x%), dans laquelle le moteur thermique fonctionne à un régime constant de ralenti et dans laquelle une partie du couple du moteur thermique est transmise en fonction de la course de pédale d'accélérateur (CPA);
- une étape (808) d'accélération activée lorsque la vitesse du véhicule (V) est inférieure à la vitesse de seuil (Vs) et lorsque la course de pédale d'accélérateur (CPA) est supérieure au pourcentage de seuil (x%), dans laquelle le couple du moteur thermique est transmis en totalité et dans laquelle le régime du moteur thermique augmente en fonction de la course de pédale d'accélérateur (CPA).

**2.** Procédé selon la revendication 1, **caractérisé en ce qu'**il comprend :

- une étape (802) de roulage activé lorsque la vitesse du véhicule est supérieure ou égale à la vitesse de seuil (Vs), dans laquelle le régime du moteur thermique augmente en fonction de la course de pédale d'accélérateur (CPA) et dans laquelle une puissance du moteur thermique est transmise en fonction de la course de pédale d'accélérateur (CPA) ;
- une étape (804) de manoeuvre activé lorsque la vitesse du véhicule est inférieure à la vitesse de seuil (Vs), au cours de laquelle est activée soit l'étape de rampage (806), soit l'étape d'accélération (808).

**3.** Procédé selon la revendication 1 ou 2, **caractérisé en ce que** dans l'étape (806) de rampage, une consigne CMOT de couple est appliquée au moteur pour garantir le maintien du régime de ralenti et la course de pédale d'accélérateur commande une fermeture d'embrayage.

**4.** Procédé selon l'une des revendications précédentes, **caractérisé en ce que** dans l'étape (808) d'accélération, une consigne (CMOT) variable de couple est appliquée au moteur en fonction de la course de pédale d'accélérateur en commandant une fermeture totale d'embrayage.

**5.** Procédé selon l'une des revendications précédentes, **caractérisé en ce qu'**une valeur de consigne est filtrée de façon à atténuer toute variation brusque de consigne.

**6.** Dispositif de contrôle commande de marche d'un véhicule équipé d'un moteur thermique (10) et d'une pédale d'accélérateur (14), comprenant un composant électronique (80) agencé pour recevoir en entrée une vitesse (V) du véhicule et une course de pédale d'accélérateur (CPA) et agencé pour générer en sortie :

- une consigne (CMOT) de couple afin de garantir le régime constant de ralenti du moteur thermique (10) et une consigne (C*) de couple à transmettre en fonction de la course de pédale d'accélérateur (CPA) lorsque la vitesse du véhicule (V) est inférieure à une vitesse de seuil (Vs) et lorsque la course de pédale d'accélérateur (CPA) est inférieure à un pourcentage de seuil (x%);
- une consigne (CMOT) de couple croissant du moteur thermique (10) en fonction de la course de pédale d'accélérateur (CPA) et une consigne (C*) de couple en saturation lorsque la vitesse du véhicule (V) est inférieure à une vitesse de seuil (Vs) et lorsque la course de pédale d'accélérateur (CPA) est supérieure au pourcentage de seuil (x%).

**7.** Dispositif selon la revendication 6, **caractérisé en ce que** le composant électronique (80) est agencé pour générer en sortie la consigne (CMOT) de couple du moteur thermique (10) et la consigne (C*) de couple, adaptées à une boîte de vitesses manuelle pilotée en mode roulage lorsque la vitesse du véhicule est supérieure ou égale à la vitesse de seuil (Vs), et en mode manoeuvre lorsque la vitesse du véhicule est inférieure à la vitesse de seuil (Vs).

**8.** Dispositif selon la revendication 6 ou 7, **caractérisé en ce que** le composant électronique (80) est agencé pour générer en sortie la consigne (CMOT) de couple du moteur thermique (10) et la consigne (C*) de couple, adaptées à une boîte de vitesses manuelle à double embrayage en mode roulage lorsque la vitesse du véhicule est supérieure ou égale à la vitesse de seuil (Vs), et en mode manoeuvre lorsque la vitesse du véhicule est inférieure à la vitesse de seuil (Vs).

**9.** Dispositif selon l'une des revendications 6 à 8, **caractérisé en ce qu'**une valeur de consigne est filtrée de façon à atténuer toute variation brusque de consigne.

Fig.1

Fig. 2

Europäisches
Patentamt

European
Patent Office

Office européen
des brevets

**RAPPORT DE RECHERCHE EUROPEENNE**

Numéro de la demande

EP 09 16 5788

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 359 336 A (ZF SACHS AG [DE]) 5 novembre 2003 (2003-11-05) * alinéas [0027], [0039] - [0041], [0052]; figures 1,4 * | 1-9 | INV. B60W10/06 B60W10/02 B60W30/18 |
| Y | EP 1 002 687 A (EATON CORP [US]) 24 mai 2000 (2000-05-24) * alinéa [0024]; figures 1,5 * | 1-9 | |
| Y | DE 101 05 749 A1 (MAN NUTZFAHRZEUGE AG [DE]) 14 août 2002 (2002-08-14) * figure 4 * | 1-9 | |
| Y | EP 0 731 294 A (EATON CORP [US]) 11 septembre 1996 (1996-09-11) * colonne 5, ligne 5-40; figures 1,4,7 * | 1-9 | |
| Y | FR 2 875 201 A (RENAULT SAS [FR]) 17 mars 2006 (2006-03-17) * figure 5 * | 5,9 | |
| Y | DE 101 14 040 A1 (BOSCH GMBH ROBERT [DE]) 11 octobre 2001 (2001-10-11) * abrégé * | 3 | DOMAINES TECHNIQUES RECHERCHES (IPC) B60W |

Le présent rapport a été établi pour toutes les revendications

| Lieu de la recherche | Date d'achèvement de la recherche | Examinateur |
|---|---|---|
| Munich | 20 octobre 2009 | Granier, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 16 5788

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-10-2009

| Document brevet cité au rapport de recherche | | Date de publication | Membre(s) de la famille de brevet(s) | | Date de publication |
|---|---|---|---|---|---|
| EP 1359336 | A | 05-11-2003 | DE | 10219420 A1 | 13-11-2003 |
| EP 1002687 | A | 24-05-2000 | BR | 9905511 A | 12-09-2000 |
| | | | CN | 1263013 A | 16-08-2000 |
| | | | DE | 69915563 D1 | 22-04-2004 |
| | | | DE | 69915563 T2 | 05-01-2005 |
| | | | ES | 2216417 T3 | 16-10-2004 |
| | | | JP | 2000158976 A | 13-06-2000 |
| | | | KR | 20000035533 A | 26-06-2000 |
| | | | US | 6071211 A | 06-06-2000 |
| DE 10105749 | A1 | 14-08-2002 | AUCUN | | |
| EP 0731294 | A | 11-09-1996 | CN | 1143580 A | 26-02-1997 |
| | | | DE | 69624396 D1 | 28-11-2002 |
| | | | DE | 69624396 T2 | 12-06-2003 |
| | | | ES | 2182944 T3 | 16-03-2003 |
| | | | JP | 8291829 A | 05-11-1996 |
| | | | US | 5681242 A | 28-10-1997 |
| FR 2875201 | A | 17-03-2006 | EP | 1791715 A1 | 06-06-2007 |
| | | | WO | 2006030146 A1 | 23-03-2006 |
| | | | JP | 2008512622 T | 24-04-2008 |
| | | | KR | 20070101847 A | 17-10-2007 |
| | | | US | 2008015757 A1 | 17-01-2008 |
| DE 10114040 | A1 | 11-10-2001 | JP | 2001349229 A | 21-12-2001 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006030145 A